# EUROPÄISCHE PATENTSCHRIFT

(11) **EP 1 123 174 B1**
(45) Veröffentlichungstag und Bekanntmachung des Hinweises auf die Patenterteilung: **22.09.2004**
(21) Anmeldenummer: 00951087.6
(22) Anmeldetag: 31.07.2000
(51) Int. Cl.: B23D 23/00, B23D 33/00, B21F 11/00

(54) **ANLAGE ZUM ABTRENNEN VON ELEMENTEN VON MATERIALSTRÄNGEN AUS STAHL**
INSTALLATION FOR SEPARATING ELEMENTS FROM STEEL SECTIONS
INSTALLATION PERMETTANT DE SEPARER DES ELEMENTS DE TRONCONS D'ACIER

(30) Priorität: 24.08.1999 AT 145299
(43) Veröffentlichungstag der Anmeldung: 16.08.2001
(73) Patentinhaber: EVG Entwicklungs- u. Verwertungs- Gesellschaft m.b.H., A-8074 Raaba (AT)
(72) Erfinder: RITTER, Klaus, A-8042 Graz (AT)
(74) Vertreter: Holzer, Walter, Dipl.-Ing.
(86) Internationale Anmeldenummer: PCT/AT2000/000209
(87) Internationale Veröffentlichungsnummer: WO 2001/014091

(56) Entgegenhaltungen:
- EP-A- 0 311 889
- GB-A- 2 322 386
- US-A- 4 068 367
- US-A- 4 635 512

## Beschreibung

Die Erfindung betrifft eine Anlage zum Abtrennen von Elementen wählbarer Länge von mehreren, insbesondere draht-, bandund streifenförmigen Materialsträngen aus Stahl, mit zumindest einer Einrichtung zum kontinuierlichen Vorschieben der Materialstränge mit hoher Geschwindigkeit, mit zumindest einer stationär angeordneten, zumindest ein bewegliches Messer aufweisende Schneideinrichtung.

Es sind Schneidvorrichtungen zum Abtrennen von Stäben wählbarer Länge von einem kontinuierlich mit hoher Geschwindigkeit zugeführten Materialstrang bekannt, bei welchen die Schneidvorrichtungen aus fliegenden Scheren bestehen. Hierbei muß die Vorschubbewegung der Scheren der Vorschubgeschwindigkeit des Materialstranges genau angepaßt werden. Nachteilig bei diesen bekannten Vorrichtungen ist, daß sie aufgrund der erforderlichen Bewegungen konstruktiv sehr aufwendig sind und daher einen großen Platzbedarf haben. Durch diesen großen konstruktiven Aufwand ist es unwirtschaftlich, bei mehradrigen Anlagen alle Materialstränge mit fliegenden Scheren auszurüsten. Lediglich zwei nebeneinander liegende Materialstränge mit gleichem Durchmesser und gleicher Vorschubgeschwindigkeit können gleichzeitig von einer Schere bearbeitet werden. Ein weiter Nachteil besteht darin, daß ein hoher Steuerungsaufwand erforderlich ist, um die Bewegungsabläufe genau aufeinander abzustimmen.

Aufgabe der Erfindung ist es, die geschilderten Nachteile zu vermeiden und eine Anlage der einleitend angegebenen Art zu schaffen, die es ermöglicht, mit konstruktiv einfachen, stationären Schneideinrichtungen ohne großen Steuerungsaufwand gleichzeitig von mehreren kontinuierlich mit hoher Geschwindigkeit zugeführten Materialsträngen Elemente wählbarer Länge abzutrennen.

Die erfindungsgemäße Anlage zeichnet sich dadurch aus, daß für jeden Materialstrang zumindest eine stationär angeordnete Schneideinrichtung vorgesehen ist, daß jede Schneideinrichtung zum schnellen Abtrennen von Elementen gleicher und/oder verschiedener Länge einzeln von einem zentralen, mit der Steuereinrichtung verbundenem Servoventil ansteuerbar ist, und daß der Hub zumindest eines Messers der Schneideinrichtung in Abhängigkeit von der Materialstärke des zu durchtrennenden Materialstranges gewählt wird.

Nach einem weiteren Merkmal der Erfindung ist zum Ausführen der Schnellen Schneidbewegung des beweglichen Messers eine Antriebseinrichtung zum Bewegen des Messers vorgesehen, die durch das von der Steuereinrichtung steuerbare Servoventil ansteuerbar ist, und es wird der Hub des beweglichen Messers mit einem mit der Steuereinrichtung verbundenem Wegaufnehmer erfaßt.

Vorzugsweise ist zum Auswählen der Materialstränge ein von der Steuereinrichtung ansteuerbarer, mit dem zentralen Servoventil und den Antriebseinrichtungen der Schneideinrichtungen verbundener Verteiler vorgesehen. Dabei weist der Verteiler pro Schneideinrichtung je ein von der Steuereinrichtung ansteuerbares Wegeventil auf.

Zweckmäßig sind die Schneideinrichtungen mit ihren Wegeventilen gruppenweise zusammenfaßbar, wobei jede Gruppe von Wegeventilen eine gemeinsame Mehrfachanschlußplatte aufweist und die Gruppen von zumindest einem Servoventil ansteuerbar sind.

Gemäß einem anderen Merkmal der Erfindung weist zum kurzzeitigen Verlangsamen des Materialstranges jede Vorschubeinrichtung zumindest ein entsprechend den Richtungen des Doppelpfeiles vom Materialstrang lüftbares Vorschubrad auf.

Weitere Merkmale und Vorteile der Erfindung werden nachfolgend an Ausführungsbeispielen unter Bezugnahme auf die Zeichnungen näher erläutert. Es zeigen:
Fig. 1 eine schematische Darstellung einer erfindungsgemäßen Anlage mit mehreren Schneideinrichtungen zur Bearbeitung mehrerer Materialstränge und
Fig. 2 eine schematische Seitenansicht einer erfindungsgemäßen Schneid- und Vorschubeinrichtung.

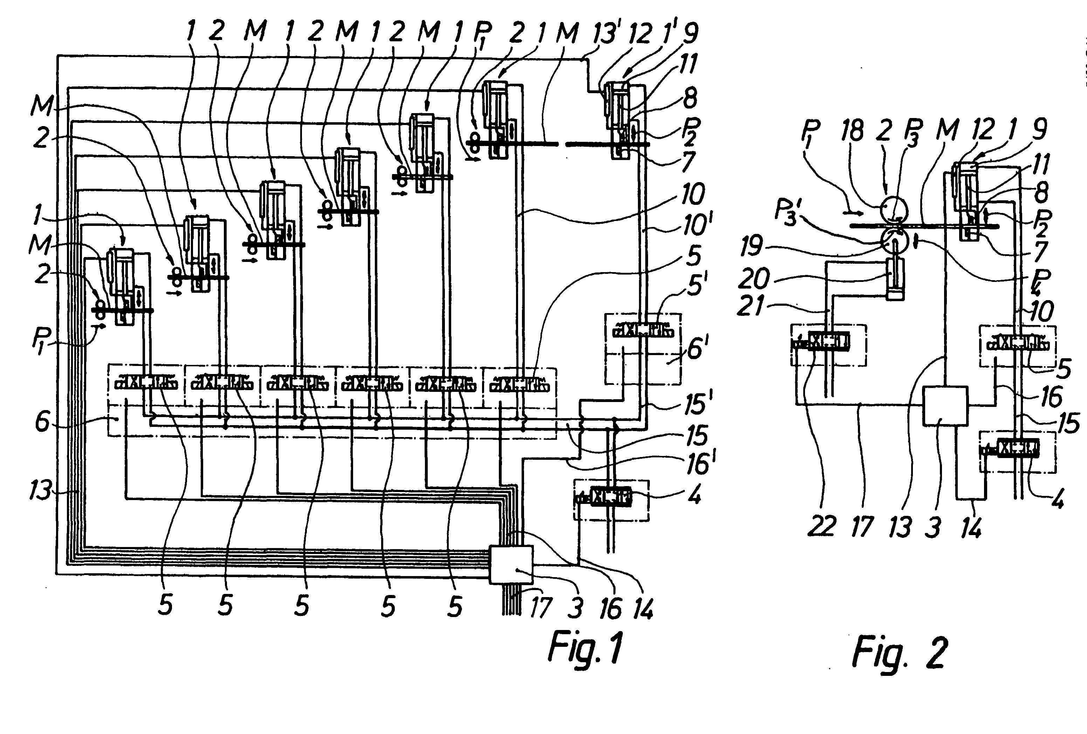

Die in Fig. 1 dargestellte Anlage dient zum Abtrennen mehrerer Elemente wählbarer Länge von kontinuierlich mit hoher Geschwindigkeit entsprechend der Flußrichtung P1 zugeführten Materialsträngen M aus Stahl. Die Materialstränge M können im Rahmen der Erfindung aus draht-, band- und streifenförmigem Material bestehen und beliebige Querschnittsformen haben. Das Material kann im Rahmen der Erfindung warmgewalzter und/oder kaltverformter Stahl sein. Die Oberfläche der Materialstränge M kann glatt oder, wie bei Bewehrungsstählen üblich, gerippt sein. Die Anlage kann im Rahmen der Erfindung beispielsweise zu einer Richt- und Schneidanlage für Bewehrungsstahl gehören, wobei die Materialstränge M vorzugsweise unterschiedliche Durchmesser und/oder Materialeigenschaften haben können.

Die erfindungsgemäße Anlage weist je Materialstrang M eine stationäre Schneideinrichtung 1 und eine Vorschubeinrichtung 2 auf, welche der besseren Übersicht halber nur schematisch dargestellt und in Fig. 2 genauer gezeigt ist. Im Rahmen der Erfindung ist es jedoch auch möglich, eine einzige zentrale Vorschubeinrichtung für alle Materialstränge M vorzusehen, die über eine entsprechend ausgestaltete Einrichtung die Materialstränge M den einzelnen Schneideinrichtungen 1 zuführt. Ferner ist es möglich, nur einen oder mehrere bzw. alle Materialstränge M mit einer weiteren Schneideinrichtung 1' zu versehen, die in einem größeren Abstand zur ersten Schneideinrichtung 1 angeordnet ist. Die zweite Schneideinrichtung 1' wird immer dann eingesetzt, wenn es erforderlich ist, an zwei räumlich getrennten Positionen abgetrennte Elemente zur Verfügung zu haben und wenn eine exakte Positionierung der Elemente aufgrund der hohen Vorschubgeschwindigkeit des Materialstranges zu ungenau und aufwendig ist. Das Erzeugen von Quer- und Längsdrähten für eine Drahtgittermatten-Schweißmaschine ist ein typischer Anwendungsfall dieser Ausführungsform.

Die dargestellte Anlage weist außerdem eine Steuereinrichtung 3, ein zentrales Servoventil 4 und für jede Schneideinrichtung 1 ein Wegeventil 5 auf, wobei alle Wegeventile 5 auf einer gemeinsamen Mehrfachanschlußplatte 6 angeordnet sind. Für die weiteren Schneideinrichtungen 1' je Materialstrang M ist jeweils ein weiteres Wegeventil 5' vorgesehen, wobei alle Wegeventile 5' auf einer Mehrfachanschlußplatte 6' angeordnet sind.

Jede Schneideinrichtung 1, 1' hat ein feststehendes Messer 7 und ein entsprechend den Richtungen des Doppelpfeiles P2 bewegliches Messer 8 zum Abtrennen des Elementes vom Materialstrang M. Die erforderliche Bewegung des Messers 8 wird mit Hilfe eines Arbeitszylinders 9 erzielt, der über Hydraulikleitungen 10 bzw. 10' mit dem Wegeventil 5 bzw. 5' verbunden ist. Der Hub des Kolbens 11 des Arbeitszylinders 9 und damit der Hub des beweglichen Messers 8 wird mit Hilfe eines Wegaufnehmers 12, der beispielsweise ein Induktivaufnehmer ist, erfaßt. Eine Signalleitung 13 bzw. 13' verbindet jeden Wegaufnehmer 12 mit der Steuereinrichtung 3 und eine Steuerleitung 14 stellt die Verbindung zwischen der Steuereinrichtung 3 und dem zentralen Servoventil 4 her. Im Rahmen der Erfindung ist es möglich, die Bewegung des beweglichen Messers 8 durch äquivalente Vorrichtungen, beispielsweise durch einen Exzentertrieb zu bewirken.

Jedes Wegeventil 5 bzw. 5' ist über die Anschlußplatte 6 bzw. 6' durch Hydraulikleitungen 15 bzw. 15' mit dem Servoventil 4 verbunden. Die Wegeventile 5 bzw. 5' werden über Steuerleitungen 16 bzw. 16' von der Steuereinrichtung 3 angesteuert. Steuerleitungen 17 verbinden die Steuereinrichtung 3 außerdem mit den Vorschubeinrichtungen 2 bzw. einer zentralen Vorschubeinrichtung.

Die in Fig. 2 schematisch dargestellte Vorschubeinrichtung 2 weist ein entsprechend der Pfeilrichtung P3 antreibbares Vorschubrad 18 und ein entsprechend der Pfeilrichtung P3' antreibbares Vorschubrad 19 auf, welches mit Hilfe eines Anpreßzylinders 20 entsprechend den Richtungen des Doppelpfeiles P4 bewegbar ist. Der Anpreßzylinder 20 ist über Hydraulikleitungen 21 mit einem schnell schaltenden Ventil 22 verbunden, das über die Steuerleitung 17 von der Steuereinrichtung 3 angesteuert wird. Im Rahmen der Erfindung kann jede Vorschubeinrichtung 2 mit einer Längenmeßeinrichtung versehen sein.

Die Anlage arbeitet in folgender Weise:

Zum Abtrennen eines Elementes von einem Materialstrang M steuert die Steuereinrichtung 3 das zentrale Servoventil 4 in Abhängigkeit von der Vorschubgeschwindigkeit des entsprechenden Materialstranges M und der gewünschten Elementlänge an und wählt das entsprechende Wegeventil 5 bzw. 5' des zugehörigen Materialstranges M vor.

Zum Schneiden fährt das bewegliche Messer 8 in der entsprechenden Richtung des Doppelpfeiles P2 aus, wodurch das Element vom Materialstrang M abgetrennt wird. Der Wegaufnehmer 12 mißt dabei die Hubbewegung des Messers 8 und gibt ein entsprechendes Signal an die Steuereinrichtung 3 ab, um die Hubbewegung entsprechend der Materialstärke des Materialstranges M zu minimieren. Zeitgleich mit dem Schnittsignal wird von der Steuereinrichtung 3 das schnell schaltende Ventil 22 für den Anpreßzylinder 20 der Vorschubeinrichtung 2 derart angesteuert, daß das lüftbare Vorschubrad 19 kurzzeitig den Materialstrang M entlastet und damit Reibspuren am Materialstrang M minimiert werden. Durch diese Vorgangsweise kann ein Materialstau während des Schneidens vermieden werden.

Bei der erfindungsgemäßen Anlage werden zum Abtrennen von Elementen gleicher Durchmesser und Längen und/oder unterschiedlicher Durchmesser und Längen die Schneideinrichtungen der Materialstränge M gezielt individuell ausgewählt.

Es versteht sich, daß die dargestellten Ausführungsbeispiele im Rahmen des allgemeinen Erfindungsgedankens verschiedentlich, insbesondere hinsichtlich der Ausgestaltung und Ausführung der Schneideinrichtung abgewandelt werden können. Im Rahmen der Erfindung ist es beispielsweise möglich, beide Messer beweglich auszuführen, um damit die Schnittgeschwindigkeit zu erhöhen.

Des weiteren ist es im Rahmen der Erfindung möglich, zur Erhöhung der Schnittleistung und zur besseren Anpassung an stark unterschiedliche Vorschubgeschwindigkeiten der Materialstränge M die Schneideinrichtungen 1; 1' mit ihren Wegeventilen 5; 5' gruppenweise zusammenzufassen, wobei jede Gruppe von Wegeventilen 5, 5' auf einer gemeinsamen Mehrfachanschlußplatte 6, 6' angeordnet ist und entweder ein Servoventil 4 für alle Gruppen oder zumindest ein Servoventil 4 pro Gruppe vorgesehen ist. Des weiteren ist es im Rahmen der Erfindung möglich, die vorderen Schneideinrichtungen 1 aller Materialstränge M und die hinteren Schneideinrichtungen 1' aller Materialstränge M jeweils gruppenweise zusammenzufassen. Jedes Servoventil 4 wird in allen Ausführungsbeispielen von der zentralen Steuereinrichtung 3 entsprechend angesteuert.

## Patentansprüche

1. Anlage zum Abtrennen von Elementen wählbarer Länge von mehreren, insbesondere draht-, band- und streifenförmigen Materialsträngen aus Stahl, mit zumindest einer Einrichtung zum kontinuierlichen Vorschieben der Materialstränge mit hoher Geschwindigkeit, mit zumindest einer, zumindest ein bewegliches Messer aufweisenden Schneideinrichtung und mit einer Steuereinrichtung, **dadurch gekennzeichnet, daß** für jeden Materialstrang (M) zumindest eine stationär angeordnete Schneideinrichtung (1; 1') vorgesehen ist, daß jede Schneideinrichtung (1, 1') zum schnellen Abtrennen von Elementen gleicher und/oder verschiedener Länge einzeln von einem zentralen, mit der Steuereinrichtung (3) verbundenem Servoventil (4) ansteuerbar ist, und daß der Hub zumindest eines Messers (8) der Schneideinrichtung (1, 1') in Abhängigkeit von der Materialstärke des zu durchtrennenden Materialstranges (M) gewählt wird.

2. Anlage nach Anspruch 1, **dadurch gekennzeichnet, daß** zum Ausführen der schnellen Schneidbewegung (P2) des beweglichen Messers (8) eine Antriebseinrichtung (9) zum Bewegen des Messers (8) vorgesehen ist, die durch das von der Steuereinrichtung (3) steuerbare Servoventil (4) ansteuerbar ist, und daß der Hub des beweglichen Messers (8) mit einem mit der Steuereinrichtung (3) verbundenem Wegaufnehmer (12) erfaßt wird.

3. Anlage nach Anspruch 2, **dadurch gekennzeichnet, daß** die Antriebseinrichtung zum Bewegen des beweglichen Messers (8) einen Arbeitszylinder (9) aufweist.

4. Anlage nach einem der Ansprüche 1 bis 3, **dadurch gekennzeichnet, daß** zum Auswählen der Materialstränge (M) ein von der Steuereinrichtung (3) ansteuerbarer, mit dem zentralen Servoventil (4) und den Antriebseinrichtungen (9) der Schneideinrichtungen (1, 1') verbundener Verteiler (5, 6; 5', 6') vorgesehen sind.

5. Anlage nach Anspruch 4, **dadurch gekennzeichnet, daß** der Verteiler pro Schneideinrichtung (1; 1') je ein von der Steuereinrichtung (3) ansteuerbares Wegeventil (5; 5') aufweist.

6. Anlage nach Anspruch 5, **dadurch gekennzeichnet, daß** die Schneideinrichtungen (1, 1') mit ihren Wegeventilen (5, 5') gruppenweise zusammenfaßbar sind, wobei jede Gruppe von Wegeventilen (5; 5') eine gemeinsame Mehrfachanschlußplatte (6; 6') aufweist und die Gruppen von zumindest einem Servoventil (4) ansteuerbar sind.

7. Anlage nach einem der Ansprüche 1 bis 6, **dadurch gekennzeichnet, daß** zum kurzzeitigen Verlangsamen des Materialstranges (M) jede Vorschubeinrichtung (2) zumindest ein entsprechend den Richtungen des Doppelpfeiles (P4) vom Materialstrang (M) lüftbares Vorschubrad (19) aufweist.

8. Anlage nach Anspruch 7, **dadurch gekennzeichnet, daß** das Vorschubrad (19) mit Hilfe eines Anpreßzylinders (20) lüftbar ist, der von der Steuereinrichtung (3) über ein schnell schaltendes Ventil (22) zeitgleich mit der Schneidbewegung (P2) des Messers (8) der Schneideinrichtung (1, 1') ansteuerbar ist.

## Claims

1. Apparatus for separating elements of selectable length from several, in particular wire-, belt- and strip-shaped strings of steel material, with at least one device for continuously advancing the strings of material at high speed, with at least one cutting device having at least one movable blade and with a control device, **characterised in that** at least one stationarily mounted cutting device (1; 1') is provided for each string of material (M), **in that** each cutting device (1, 1') can be controlled individually by a central servo valve (4) connected to the control device (3) for rapidly separating elements having the same and/or different length, and **in that** the stroke of at least one blade (8) of the cutting device (1, 1') is selected as a function of the material thickness of the string of material (M) to be cut through.

2. Apparatus according to claim 1, **characterised in that** for performing the rapid cutting movement (P2) of the movable blade (8) there is provided a drive mechanism (9) for moving the blade (8), which can be controlled by the servo valve (4) which can be controlled by the control device (3), and **in that** the stroke of the movable blade (8) is detected with a displacement transducer (12) connected to the control device (3).

3. Apparatus according to claim 2, **characterised in that** the drive mechanism for moving the movable blade (8) has a working cylinder (9).

4. Apparatus according to any of claims 1 to 3, **characterised in that** a distributor (5, 6; 5', 6') which can be controlled by the control device (3) and is connected to the central servo valve (4) and to the drive mechanisms (9) of the cutting devices (1, 1') is provided for selecting the strings of material (M).

5. Apparatus according to claim 4, **characterised in that** the distributor for each cutting device (1; 1') has in each case a directional control valve (5; 5') which can be controlled by the control device (3).

6. Apparatus according to claim 5, **characterised in that** the cutting devices (1, 1') with their directional control valves (5, 5') can be combined into groups, wherein each group of directional control valves (5; 5') has a common multiple connection plate (6; 6') and the groups can be controlled by at least one servo valve (4).

7. Apparatus according to any of claims 1 to 6, **characterised in that**, to slow down the string of material (M) for a short time, each advance mechanism (2) has at least one advance wheel (19) which can be ventilated by the string of material (M) in the directions of the double arrow (P4).

8. Apparatus according to claim 7, **characterised in that** the advance wheel (19) can be ventilated by means of a pressure-applying cylinder (20) which can be controlled by the control device (3) via a rapidly switching valve (22) simultaneously with the cutting movement (P2) of the blade (8) of the cutting device (1, 1').

## Revendications

1. Installation pour la séparation d'éléments de longueur sélectionnable de plusieurs tronçons de matière, en particulier de fils, de bandes et de feuillards en acier, avec au moins une installation pour l'avance continue des tronçons de matière à vitesse élevée, avec au moins une installation de coupe présentant au moins une lame mobile et avec un dispositif de commande, **caractérisée en ce que**, pour chaque tronçon de matière (M), au moins une installation de coupe disposée de façon immobile (1, 1') est prévue, **en ce que** chaque installation de coupe (1, 1') peut être pilotée pour la séparation rapide d'éléments de même longueur et/ou de longueurs différentes par une servovalve centrale (4) raccordée au dispositif de commande (3), et **en ce que** la course de levage d'au moins une lame (8) du dispositif de coupe (1, 1') est choisie en fonction de l'épaisseur de matière du tronçon de matière à séparer (M).

2. Installation selon la revendication 1, **caractérisée en ce que**, pour effectuer le mouvement de coupe rapide (P2) de la lame mobile (8), il est prévu un dispositif d'entraînement (9) pour déplacer la lame (8) qui peut être piloté par la servovalve (4) commandée par le dispositif de commande (3), et **en ce que** la course de levage de la lame mobile (8) est saisie par un capteur de course (12) raccordé au dispositif de commande (3).

3. Installation selon la revendication 2, **caractérisée en ce que** le dispositif d'entraînement pour déplacer la lame mobile (8) présente un vérin de travail (9).

4. Installation selon l'une des revendications 1 à 3, **caractérisée en ce que**, pour sélectionner les tronçons de matière (M), sont prévus des répartiteurs (5, 6 ; 5', 6') raccordés à la servovalve centrale (4) et aux dispositifs d'entraînement (9) des installations de coupe (1, 1').

5. Installation selon la revendication 4, **caractérisée en ce que** le répartiteur par installation de coupe (1 ; 1') présente respectivement une vanne multivoie (5 ; 5') pouvant être pilotée par le dispositif de commande (3).

6. Installation selon la revendication 5, **caractérisée en ce que** les dispositifs de coupe (1, 1') peuvent être regroupés avec leurs vannes multivoies (5, 5'), tandis que chaque groupe de vannes multivoies (5 ; 5') présente une plaque de raccordement multiple commune (6 ; 6') et les groupes peuvent être pilotés par au moins une servovalve (4).

7. Installation selon l'une des revendications 1 à 6, **caractérisée en ce que**, pour le ralentissement à court terme du tronçon de matière (M), chaque dispositif d'avance (2) présente au moins une roue d'avance (19) pouvant être bloquée en fonction des directions de la double flèche (P4) du tronçon de matière (M).

8. Installation selon la revendication 7, **caractérisée en ce que** la roue d'avance (19) peut être bloquée à l'aide d'un vérin de pression (20) qui peut être piloté à partir du dispositif de commande (3) par l'intermédiaire d'une vanne à commutation rapide (22), simultanément au mouvement de coupe (P2) de la lame (8) de l'installation de coupe (1, 1').
